# EUROPÄISCHE PATENTANMELDUNG

(11) **EP 3 540 650 A1**
(43) Veröffentlichungstag der Anmeldung: **18.09.2019**
(21) Anmeldenummer: 19157610.7
(22) Anmeldetag: 18.02.2019
(51) Int. Cl.: G06K 9/62

(54) **MASCHINELLES LERNVERFAHREN FÜR EINE VORRICHTUNG ZUR SIGNALAUSWERTUNG**

(30) Priorität: 14.03.2018 DE 102018203851
(71) Anmelder: Robert Bosch GmbH, 70442 Stuttgart (DE)
(72) Erfinder: REICH, Christian, 71229 Leonberg (DE); EHRENPFORDT, Ricardo, 70825 Korntal-Muenchingen (DE); MANSOUR, Ahmad, 71263 Weil Der Stadt (DE); SCHELLENBERG, Max, 71254 Ditzingen (DE)

(57) **Zusammenfassung**

Die Erfindung betrifft ein maschinelles Lernverfahren für eine Vorrichtung zur Signalauswertung mit den Schritten: Bereitstellen eines Lernsatzes von Signalen, einer Soll-Klassifizierung, eines Wertebereichs von Frequenzbereichen, eines Wertebereichs von Eigenschaften und einer Zielgenauigkeit an die Vorrichtung zur Signalauswertung (S1); und Ansteuern der Vorrichtung zur Signalauswertung zum selbstständigen Ausführen der folgenden Verfahrensschritte: Auswählen mindestens eines Frequenzbereichs (S2a), Filtern der Signale des vorgegebenen Lernsatzes unter Verwendung des mindestens einen ausgewählten Frequenzbereichs (S2b), Auswählen mindestens einer zu untersuchenden Eigenschaft (S2c), Bestimmen mindestens eines Einzelwerts pro gefiltertem Signal für die mindestens eine ausgewählte Eigenschaft (S2d), Klassifizieren des Lernsatzes von Signalen (S2e), Bestimmten einer Treffgenauigkeit des klassifizierten Lernsatzes von Signalen bezüglich der vorgegebenen Soll-Klassifizierung (S2f), Vergleichen der bestimmten Treffgenauigkeit mit der vorgegebenen Zielgenauigkeit (S2g) und Festlegen und/oder Ausgeben des mindestens einen zuletzt ausgewählten Frequenzbereichs und der mindestens einen zuletzt ausgewählten Eigenschaft (S2h).

## Beschreibung

Die Erfindung betrifft ein maschinelles Lernverfahren für eine Vorrichtung zur Signalauswertung. Ebenso betrifft die Erfindung einen Datenträger für eine Vorrichtung zur Signalauswertung. Des Weiteren betrifft die Erfindung eine Vorrichtung zur Signalauswertung.

### Stand der Technik

Aus dem Stand der Technik sind Lernverfahren bekannt. Beispielsweise offenbart die US 2016/0335550 A1 ein Verfahren zur Verwendung statistischer Lernverfahren, welches zur Entwicklung und/oder Auswahl prädiktativer Modelle für Vorhersageprobleme geeignet sein soll.

### Offenbarung der Erfindung

Die Erfindung schafft ein maschinelles Lernverfahren für eine Vorrichtung zur Signalauswertung mit den Merkmalen des Anspruchs 1, einen Datenträger für eine Vorrichtung zur Signalauswertung mit den Merkmalen des Anspruchs 5 und eine Vorrichtung zur Signalauswertung mit den Merkmalen des Anspruchs 7.

### Vorteile der Erfindung

Die vorliegende Erfindung schafft Möglichkeiten zum maschinellen Optimieren mindestens eines zum Filtern von Signalen/Messsignalen verwendeten Frequenzbereichs. Wie unten genauer erläutert wird, können dabei sowohl eine Anzahl der verwendeten "Filter" als auch deren "Bandbreiten" so optimiert werden, dass die damit gefilterten Signale/Messsignale verlässlicher und mit einem geringeren Aufwand auswertbar sind. Die zur Optimierung des mindestens einen Frequenzbereichs auszuführenden Verfahrensschritte können alle maschinell/offline bewirkt werden, ohne dass ein personeller Aufwand dazu erforderlich ist. Die vorliegende Erfindung trägt somit vorteilhaft dazu bei, einen von mindestens einer Person auszuführenden Arbeitsaufwand beim Auswerten von Signalen/Messsignalen signifikant zu reduzieren.

Die vorliegende Erfindung schafft auch ein maschinell/offline ausführbares Optimierungsschema zur Auswahl/Festlegung der zur Auswertung der Signale/Messsignale zu untersuchenden Eigenschaften/Merkmale. Die auf diese Weise als relevant erkannten Eigenschaften/Merkmale können anschließend zum Ausführen eines "überwachten Lernverfahrens" ("Supervised Learning Method") genutzt werden.

Als vorteilhafte Weiterbildung des maschinellen Lernverfahrens kann je ein wahrscheinlicher Arbeits- und/oder Rechneraufwand für jede Eigenschaft aus dem Wertebereich von Eigenschaften an die Vorrichtung zur Signalauswertung bereitgestellt werden, wobei in dem in dem vorausgehenden Absatz beschriebenen ersten Teilschritt zuerst Eigenschaften mit einem geringeren wahrscheinlichen Arbeits- und/oder Rechneraufwand im Vergleich mit anderen Eigenschaften des Wertebereichs von Eigenschaften als die mindestens eine zu untersuchende Eigenschaft aus dem Wertebereich ausgewählt werden. Die hier beschriebene Weiterbildung realisiert somit ein Auswahlschema der zu untersuchenden Eigenschaften/Merkmale, welches nicht nur verlässlich ist, sondern auch eine Reduzierung eines dafür notwendigen Energieverbrauchs und/oder der dazu bereitzustellenden Rechnerkapazitäten erlaubt.

Als weitere vorteilhafte Weiterbildung kann der Verfahrensschritt "Auswählen mindestens eines Frequenzbereichs aus dem vorgegebenen Wertebereich von Frequenzbereichen" die folgenden Teilschritte umfassen: Wählen einer ersten Anzahl von auszuwählenden Frequenzbereichen so, dass die erste Anzahl ≥ 1 ist und unter einer vorgegebenen ersten Maximalanzahl liegt, und Auswählen von so vielen Frequenzbereichen aus dem vorgegebenen Wertebereich von Frequenzbereichen, dass die Anzahl von ausgewählten Frequenzbereichen der in dem vorausgehenden Teilschritt gewählten ersten Anzahl entspricht. Auf diese Weise kann auch die "Anzahl der verwendeten Filter" zum Filtern der auszuwertenden Signale/Messsignale maschinell/offline optimiert werden.

Alternativ oder ergänzend kann Verfahrensschritt "Auswählen mindestens einer zu untersuchenden Eigenschaft aus dem vorgegebenen Wertebereich von Eigenschaften" die folgenden Teilschritte umfassen: Wählen einer zweiten Anzahl von in dem jeweiligen Teilschritt auszuwählenden Eigenschaften so, dass die zweite Anzahl ≥ 1 ist und unter einer vorgegebenen zweiten Maximalanzahl liegt, und Auswählen von so vielen Eigenschaften aus dem vorgegebenen Wertebereich von Eigenschaften, dass die Anzahl von ausgewählten Eigenschaften der in dem vorausgehenden Teilschritt gewählten zweiten Anzahl entspricht. Auch die "Anzahl der relevanten Eigenschaften/Merkmale" kann somit auf einfache Weise maschinell/offline optimiert werden.

Die vorausgehend beschriebenen Vorteile bewirkt auch ein entsprechender Datenträger für eine Vorrichtung zur Signalauswertung. Der Datenträger kann zur Ausführung aller oben beschriebenen Ausführungsformen des maschinellen Lernverfahrens weitergebildet sein.

Des Weiteren schafft auch eine entsprechende Vorrichtung zur Signalauswertung die oben beschriebenen Vorteile. Auch die Vorrichtung zur Signalauswertung kann derart weitergebildet sein, dass alle oben beschriebenen Ausführungsformen des maschinellen Lernverfahrens damit ausführbar sind/ausgeführt werden.

### Kurze Beschreibung der Zeichnungen

Weitere Merkmale und Vorteile der vorliegenden Erfindung werden nachfolgend anhand der Figuren erläutert. Es zeigen:
- Fig. 1: ein Flussdiagramm zum Erläutern einer Ausführungsform des maschinellen Lernverfahrens;
- Fig. 2: eine schematische Darstellung einer Ausführungsform des Datenträgers; und
- Fig. 3: eine schematische Darstellung der Vorrichtung zur Signalauswertung.

### Ausführungsformen der Erfindung

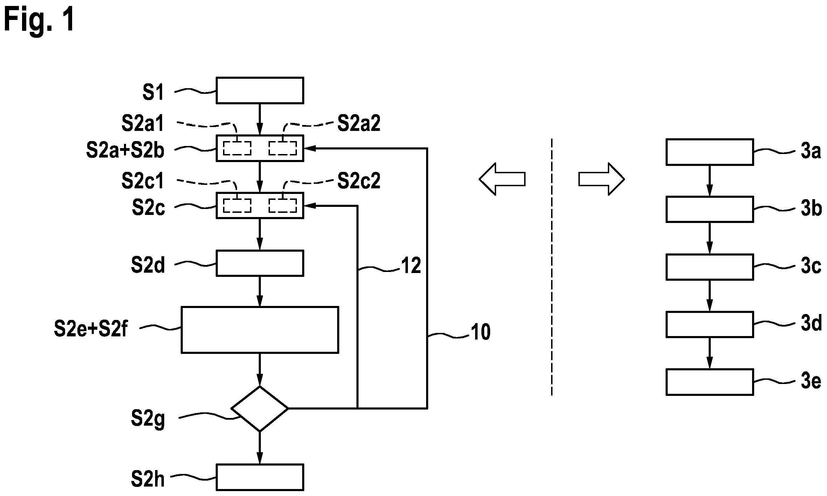

Fig. 1 zeigt ein Flussdiagramm zum Erläutern einer Ausführungsform des maschinellen Lernverfahrens.

Das im Weiteren beschriebene maschinelle Lernverfahren wird unter Verwendung einer Vorrichtung zur Signalauswertung ausgeführt. Unter der Vorrichtung zur Signalauswertung kann beispielsweise ein Computer verstanden werden. Insbesondere kann die Vorrichtung zur Signalauswertung ein als Gateway zur Datenverarbeitung zwischen mindestens einem Sensor und mindestens einer nachfolgenden Verarbeitungsinstanz (z.B. einer Cloud) einsetzbarer/eingesetzter Computer sein. Ebenso kann die Vorrichtung zur Signalauswertung ein Microcontroller sein. In diesem Fall ist die Vorrichtung zur Signalauswertung vorzugsweise ein in einem Sensorknoten und/oder in einem Sensorsystem integrierbarer oder integrierter Microcontroller. Es wird hier jedoch ausdrücklich darauf hingewiesen, dass eine Ausführbarkeit des im Weiteren beschriebenen maschinellen Lernverfahrens nicht die hier aufgezählten Beispiele für die Vorrichtung zur Signalauswertung beschränkt ist.

Das mittels der Fig. 1 schematisch wiedergegebene maschinelle Lernverfahren beginnt mit einem Verfahrensschritt S1, in welchem zumindest ein Lernsatz von Signalen, eine Soll-Klassifizierung (Label) des Lernsatzes von Signalen, ein Wertebereich von Frequenzbereichen, ein Wertebereich von Eigenschaften und eine Zielgenauigkeit an die Vorrichtung zur Signalauswertung bereitgestellt/ausgegeben werden. Das Bereitstellen/Ausgeben zumindest des Wertebereichs von Frequenzbereichen und des Wertebereichs von Eigenschaften kann beispielsweise durch ein Ablesen dieser Größen von einem Datenträger oder einer Speichereinheit der Vorrichtung zur Signalauswertung erfolgen. Unter dem Wertebereich von Eigenschaften kann auch ein Wertebereich von Merkmalen verstanden werden. Als Eigenschaften/Merkmale können beispielsweise mindestens eine mathematische Größe, wie insbesondere ein Mittelwert und/oder eine Standardabweichung, mindestens eine physikalische Größe, speziell ein Mittelwert der jeweiligen physikalischen Größe und/oder eine Standardabweichung der jeweiligen physikalischen Größe, und/oder eine Konzentration eines chemischen Stoffes, selbst ein Mittelwert der Konzentration des jeweiligen chemischen Stoffes und/oder eine Standardabweichung der Konzentration des jeweiligen chemischen Stoffes, in dem Wertebereich von Eigenschaften vorliegen.

Vorzugsweise werden der Lernsatz von Signalen, die Soll-Klassifizierung des Lernsatzes von Signalen und/oder die Zielgenauigkeit von einem Benutzer der Vorrichtung zur Signalauswertung bereitgestellt/ausgegeben. Der Benutzer kann somit wählen, für welche "Art von Signalen" die Vorrichtung zur Signalauswertung "angelernt" werden soll. Als Signale des Lernsatzes können Beispiel-Signale/Lern-Signale an die Vorrichtung zur Signalauswertung bereitgestellt/ausgegeben werden, welche bei einem späteren Betrieb der (mittels des hier beschriebenen Verfahrens "angelernten"/"optimierten") Vorrichtung zur Signalauswertung (bzw. einer entsprechenden anderen Vorrichtung zur Signalauswertung) zu erwartenden Messsignalen oder Rohdaten entsprechen. Beispielsweise können die Signale des Lernsatzes "Beispiel-Luftschallsignale" oder "Lern-Luftschallsignale" sein. Ebenso kann der Benutzer mittels der Vorgabe/Wahl der Zielgenauigkeit selbst bestimmen, welcher Optimierungsgrad mittels des maschinellen Lernverfahrens erreicht werden soll.

In einem nachfolgenden Verfahrensschritt S2 wird die Vorrichtung zur Signalauswertung derart angesteuert, dass die Vorrichtung zur Signalauswertung die folgenden Verfahrensschritte S2a bis S2h (selbständig/eigenständig) ausführt. Das Ausführen der Verfahrensschritte S2a bis S2h erfordert somit keinen personellen Aufwand, insbesondere kann Treffen von Entscheidungen durch eine Person. Man kann dies auch damit umschreiben, dass die Verfahrensschritte S2a bis S2h maschinell/offline durch die Vorrichtung zur Signalauswertung ausgeführt werden.

In einem Verfahrensschritt S2a wählt die Vorrichtung zur Signalauswertung (selbständig/eigenständig) mindestens einen Frequenzbereich aus dem vorgegebenen Wertebereich von Frequenzbereichen aus. Eine (erste) Anzahl der in dem Verfahrensschritt S2a aus dem Wertebereich von Frequenzbereichen auszuwählenden Frequenzbereiche kann der Vorrichtung zur Signalauswertung fest vorgegeben sein, beispielsweise durch ein Bereitstellen/Ausgeben der (ersten) Anzahl an die Vorrichtung zur Signalauswertung in dem Verfahrensschritt S1. Alternativ kann der Verfahrensschritt S2a auch die Teilschritte S2a1 und S2a2 umfassen. In diesem Fall kann die Vorrichtung zur Signalauswertung in dem Teilschritt S2a1 die (erste) Anzahl von in dem Verfahrensschritt S2a aus dem Wertebereich von Frequenzbereichen auszuwählenden Frequenzbereichen (selbständig/eigenständig) so wählen, dass die (erste) Anzahl ≥ 1 ist und unter einer vorgegebenen ersten Maximalanzahl liegt. Anschließend wählt die Vorrichtung zur Signalauswertung in dem Teilschritt S2a2 (selbständig/eigenständig) so viele Frequenzbereiche aus dem vorgegebenen Wertebereich von Frequenzbereichen aus, dass die "Anzahl von ausgewählten Frequenzbereichen" der in dem Teilschritt S2a1 gewählten (ersten) Anzahl entspricht.

Nach dem Verfahrensschritt S2a filtert die Vorrichtung zur Signalauswertung die Signale des vorgegebenen Lernsatzes (selbständig/eigenständig) unter Verwendung des mindestens einen (in dem Verfahrensschritt S2a) ausgewählten Frequenzbereichs als Verfahrensschritt S2b. Beispielsweise werden dabei aus jedem Signal des vorgegebenen Lernsatzes Frequenzen innerhalb des mindestens einen ausgewählten Frequenzbereichs herausgefiltert. Anschließend können die auf diese Weise "bearbeiteten" Signale als gefilterte Signale, bzw. als gefilterter Lernsatz von Signalen, abgespeichert werden. In dem Verfahrensschritt S2b kann zuerst eine Frequenztransformation der Signale des vorgegebenen Lernsatzes ausgeführt werden, wobei die erhaltenen "Frequenzsignale" anschließend unter Verwendung des mindestens einen (in dem Verfahrensschritt S2a) ausgewählten Frequenzbereichs gefiltert werden. Sofern gewünscht, können die "gefilterten Frequenzsignale" anschließend mittels einer weiteren Frequenztransformation in die "gefilterten Signale" umgewandelt werden.

Der mindestens eine (in dem Verfahrensschritt S2a) ausgewählte Frequenzbereich kann als mindestens ein "Filter", bzw. als ein "Filterset" oder als ein "Set von Filtern" umschrieben werden. (In dem Teilschritt S2a1 kann damit eine "Anzahl von Filtern" als (erste) Anzahl gewählt werden, wonach in dem Teilschritt S2a2 eine "Bandbreite der Filter" für die gewählte "Anzahl von Filtern" festgelegt wird.) Der Verfahrensschritt S2b kann auch als ein "Preprocessing Step" bezeichnet werden, in welchem die Signale des Lernsatzes so vorbearbeitet werden, dass in dem weiteren Verfahren nur noch als "interessante Signalbereiche" festgelegte "gefilterte Signale" auszuwerten sind. Das mittels des Verfahrensschritt S2a ausgeführte Wählen des mindestens einen Frequenzbereiches und das anschließend in dem Verfahrensschritt S2b ausgeführte Filtern unter Verwendung des mindestens einen (in dem Verfahrensschritt S2a) ausgewählten Frequenzbereichs reduziert somit einen maschinellen Aufwand einer später auszuführenden Signalauswertung signifikant.

In einem weiteren Verfahrensschritt S2c wählt die Vorrichtung zur Signalauswertung (selbständig/eigenständig) mindestens eine (an dem Lernsatz von Signalen) zu untersuchende Eigenschaft aus dem vorgegebenen Wertebereich von Eigenschaften aus. Anstelle von einem "sturen Abfragen von vorgegebenen Eigenschaften/Merkmalen" sucht sich die Vorrichtung zur Signalauswertung in dem Verfahrensschritt S2c (selbständig/eigenständig) eine "Kombination von Eigenschaften/Merkmalen", bzw. ein "Set von Eigenschaften/Merkmalen" mittels welchem eine gute Genauigkeit des Lernsatzes von Signalen erreicht wird. Das hier beschriebene maschinelle Lernverfahren ermöglicht somit ein "überwachtes Lernen" (Supervised Learning) zum Erkennen/Feststellen der zur Signalauswertung am besten geeigneten Eigenschaften/Merkmale. Das Verfahren bietet damit nicht nur ein Finden eines geeigneten "Sets von Filtern", sondern auch das Finden eines "Sets von Eigenschaften/Merkmalen", mittels welchem sich die besten Klassifizierungsresultate erreichen lassen.

Unter der mindestens einen zu untersuchenden Eigenschaft kann auch mindestens ein zu untersuchendes Merkmal aus dem vorgegebenen Wertebereich von Merkmalen verstanden werden. Eine (zweite) Anzahl der in dem Verfahrensschritt S2c aus dem Wertebereich von Eigenschaften/Merkmalen auszuwählenden Eigenschaften/Merkmale kann der Vorrichtung zur Signalauswertung fest vorgegeben sein, beispielsweise durch ein Bereitstellen/Ausgeben der (zweiten) Anzahl an die Vorrichtung zur Signalauswertung in dem Verfahrensschritt S1. Als mögliche Weiterbildung kann der Verfahrensschritt S2c auch die Teilschritte S2c1 und S2c2 umfassen. In diesem Fall wählt die Vorrichtung zur Signalauswertung in dem Teilschritt S2c1 (selbständig/eigenständig) die (zweite) Anzahl von (in dem Verfahrensschritt S2c) aus dem Wertebereich von Eigenschaften/Merkmalen auszuwählenden Eigenschaften/Merkmalen so, dass die (zweite) Anzahl ≥ list und unter einer vorgegebenen zweiten Maximalanzahl liegt. Danach werden in dem Teilschritt S2c2 so viele Eigenschaften/Merkmale aus dem vorgegebenen Wertebereich von Eigenschaften/Merkmalen ausgewählt, dass die "Anzahl von ausgewählten Eigenschaften/Merkmalen" der in dem Teilschritt S2c1 gewählten (zweiten) Anzahl entspricht.

Anschließend bestimmt die Vorrichtung zur Signalauswertung (selbständig/eigenständig) in einem Verfahrensschritt S2d mindestens einen Einzelwert pro gefiltertem Signal für die mindestens eine (in dem Verfahrensschritt S2c aus dem vorgegebenen Wertebereich von Eigenschaften) ausgewählte Eigenschaft. Als jeweiliger Einzelwert eines gefilterten Signals wird der die jeweilige Eigenschaft/das jeweilige Merkmal wiedergebende Wert für das jeweilige gefilterte Signal bestimmt. Man erhält dadurch für jede untersuchte Eigenschaft/für jedes untersuchte Merkmal jeweils eine Anzahl von Einzelwerte gleich einer Anzahl der gefilterten Signale, wobei die für die gleiche Eigenschaft/das gleiche Merkmal bestimmten Einzelwerte unterschiedlicher gefilterter Signale voneinander abweichen können. (Die mindestens eine Eigenschaft/das mindestens eine Merkmal, für welche/welches in dem Verfahrensschritt S2c Einzelwerte der gefilterten Signale bestimmt werden, wird im Weiteren als mindestens eine untersuchte Eigenschaft bezeichnet.)

Danach wird der Lernsatz von Signalen in einem Verfahrensschritt S2e von der Vorrichtung zur Signalauswertung (selbständig/eigenständig) unter Berücksichtigung der bestimmten Einzelwerte klassifiziert. Vorzugsweise wird dazu ein einfacher Klassifizierer (ein Entscheidungsbaum) anstelle eines komplexer Klassifizierers (ein neuronales Netz mit vielen Schichten) eingesetzt. In einem Verfahrensschritt S2f wird eine Treffgenauigkeit des klassifizierten Lernsatzes von Signalen bezüglich der vorgegebenen Soll-Klassifizierung des Lernsatzes von Signalen von der Vorrichtung zur Signalauswertung (selbständig/eigenständig) bestimmt.

In einem weiteren Verfahrensschritt S2g wird die bestimmte Treffgenauigkeit mit der vorgegeben Zielgenauigkeit verglichen. Sofern die bestimmte Treffgenauigkeit von der vorgegebenen Zielgenauigkeit abweicht, werden zumindest die Verfahrensschritte S2c bis S2g wiederholt. Außerdem werden, sofern die Verfahrensschritte S2c bis S2g für den mindestens einen zuletzt ausgewählten Frequenzbereich so oft ausgeführt wurden, dass alle Kombinationen von Eigenschaften aus dem Wertebereich von Eigenschaften getestet sind, die Verfahrensschritte S2a bis S2g wiederholt. (Unter dem mindestens einen zuletzt ausgewählten Frequenzbereich ist der mindestens eine Frequenzbereich zu verstehen, welcher beim letztmaligen Ausführen des Verfahrensschritts S2a aus dem Wertebereich von Frequenzbereichen ausgewählt wurde.)

Man kann dies auch damit umschreiben, dass, sofern alle Kombinationen von Eigenschaften aus dem Wertebereich von Eigenschaften für den mindestens einen zuletzt ausgewählten Frequenzbereich vergeblich getestet wurden (d.h. ohne eine die Zielgenauigkeit erfüllende Treffgenauigkeit zu erreichen), eine äußere Schleife 10 ausgeführt wird, mittels welcher die Verfahrensschritte S2a bis S2g wiederholt werden. Solange jedoch alle Kombinationen von Eigenschaften aus dem Wertebereich von Eigenschaften für den mindestens einen zuletzt ausgewählten Frequenzbereich noch nicht getestet sind, werden lediglich die Verfahrensschritte S2c bis S2g mittels einer inneren Schleife 12 wiederholt.

Wird in dem Verfahrensschritt S2g jedoch erkannt, dass die bestimmte Zielgenauigkeit die Treffgenauigkeit erfüllt, so wird das maschinelle Lernverfahren mit einem Verfahrensschritt S2h fortgesetzt. In dem Verfahrensschritt S2h erfolgt ein (selbständiges/eigenständiges) Festlegen und/oder Ausgeben des mindestens einen zuletzt ausgewählten Frequenzbereichs als mindestens einen (zur Signalauswertung) gutbefundenen/optimierten Frequenzbereich durch die Vorrichtung zur Signalauswertung. Außerdem wird in dem Verfahrensschritt S2h zusätzlich (zu dem mindestens einen zuletzt ausgewählten Frequenzbereichs als mindestens einen gutbefundenen/optimierten Frequenzbereich) noch die mindestens eine zuletzt ausgewählte Eigenschaft als mindestens eine (zur Signalauswertung) gutbefundene/optimierten Eigenschaft von der Vorrichtung zur Signalauswertung (selbständig/eigenständig) festgelegt und/oder ausgegeben. (Unter der mindestens einen zuletzt ausgewählten Eigenschaft ist die mindestens eine Eigenschaft oder das mindestens eine Merkmal zu verstehen, welche/welches beim letztmaligen Ausführen des Verfahrensschritts S2c aus dem Wertebereich von Eigenschaften/Merkmalen ausgewählt wurde. Entsprechend ist unter dem mindestens einen zuletzt ausgewählten Frequenzbereich der mindestens eine Frequenzbereich zu verstehen, welcher beim letztmaligen Ausführen des Verfahrensschritts S2a aus dem Wertebereich von Frequenzbereichen ausgewählt wurde.)

Das mittels des Flussdiagramms der Fig. 1 schematisch dargestellte maschinelle Lernverfahren ermöglicht somit ein maschinell/offline ausführbares Optimieren der zu filternden Frequenzbereiche, bzw. des mindestens einen "Filters" oder des "Sets von Filtern". Ein wesentlicher Vorteil des Verfahrens der Fig. 1 liegt darin, dass die herkömmlicherweise unter einem enormen Arbeitsaufwand mindestens einer Person auszuführende Optimierung des mindestens einen "Filters" oder des "Sets von Filtern" problemlos mittels der Vorrichtung zur Signalauswertung ohne einen personellen Aufwand, insbesondere ohne ein Treffen von Entscheidungen durch eine Person, ausgeführt werden kann.

Das in Fig. 1 schematisch dargestellte maschinelle Lernverfahren erlaubt zusätzlich ein Erkennen der zur Signalauswertung relevanten/gut geeigneten Eigenschaften/Merkmale. Mittels der inneren Schleife 12 kann durch die Auswahl des besten (und minimalen) "Sets von Eigenschaften/Merkmalen" die Treffgenauigkeit ohne einen personellen Aufwand, d.h. ohne ein Treffen von Entscheidungen durch eine Person, gesteigert werden. Gleichzeitig kann mittels der äußeren Schleife 10 das "Set von Filtern" optimiert werden. Die Schleifen 10 und/oder 12 können solange ausgeführt werden, bis das "Set von Filtern" und das "Set von Eigenschaften/Merkmalen" zueinander optimiert sind. Das maschinelle Lernverfahren kann auch als "globales Optimierungsverfahren" zum Finden einer globalen Lösung für ein Optimierungsproblem (z.B. eines genetischen Algorithmus) offline ausgeführt werden.

Als vorteilhafte Weiterbildung des oben beschriebenen maschinellen Lernverfahrens kann in dem Verfahrensschritt S1 (zusätzlich zu dem Lernsatz von Signalen, der Soll-Klassifizierung des Lernsatzes von Signalen, dem Wertebereich von Frequenzbereichen, dem Wertebereich von Eigenschaften/Merkmalen und der Zielgenauigkeit) noch je ein wahrscheinlicher Arbeits- und/oder Rechneraufwand für jede Eigenschaft aus dem Wertebereich von Eigenschaften/Merkmalen an die Vorrichtung zur Signalauswertung bereitgestellt/ausgegeben werden. Beispielsweise können auch diese Daten von dem Datenträger oder der Speichereinheit der Vorrichtung zur Signalauswertung abgelesen werden.

In diesem Fall werden (bei dem nachfolgenden mindestens einmaligen Ausführen des Teilschritts S2c) zuerst Eigenschaften/Merkmale mit einem geringen wahrscheinlichen Arbeits- und/oder Rechneraufwand im Vergleich mit anderen Eigenschaften/Merkmalen des Wertebereichs von Eigenschaften/Merkmalen als die mindestens eine zu untersuchende Eigenschaft aus dem Wertebereich von Eigenschaften/Merkmalen ausgewählt. Die Weiterbildung bietet somit eine Möglichkeit, ein geeignetes "Set von Eigenschaften/Merkmalen" zum überwachten Lernen zu finden, bei welchen sowohl ein Energieverbrauch als auch Anforderungen an eine zur Signalauswertung geeignete Elektronik/Prozessor-Hardware reduziert sind. Somit kann auch ein "Set von Eigenschaften/Merkmalen" mittels des hier beschriebenen maschinellen Lernverfahrens gefunden werden, welches zur "klugen Sensorverwendung" (Smart Sensor Application) ausgelegt ist, und deshalb nur eine vergleichsweise einfach ausgebildete Elektronik/Prozessor-Hardware benötigt und zur Signalauswertung nur einen relativ geringen Energieverbrauch erfordert. (Beispielsweise ist das Berechnen eines zeitlichen Mittelwerts einfacher ausführbar als das Berechnen einer Frequenzabweichung, das Berechnen einer Festkommazahl (Fixed Point Format) einfacher ausführbar als das Berechnen einer Gleitkommazahl (Floating Point Format) und das Berechnen einer einfachen Genauigkeit einer Gleitkommazahl (Single-Precision Floating Point Format) einfacher ausführbar als das Berechnen einer doppelten Genauigkeit einer Gleitkommazahl (Double-Precision Floating Point Format).) Auf diese Weise können ein Bauraumbedarf, ein Gewicht und/oder Kosten der zur Signalauswertung mit dem gewählten "Set von Eigenschaften/Merkmalen" benutzten Elektronik/Prozessor-Hardware reduziert werden, da einfach berechenbare Eigenschaften/Merkmale nur eine vergleichsweise kleinvolumige, leichte und/oder kostengünstige Elektronik/Prozessor-Hardware zu ihrer Bestimmung erfordern. Zur Signalauswertung kann dann beispielsweise ein Mikrocontroller (µC) mit oder ohne Gleitkommaeinheit (FPU, Floating Point Unit) verwendet werden. Durch die Reduzierung des Energieverbrauchs, des Bauraumbedarfs und/oder des Gewichts der Elektronik/Prozessor-Hardware kann eine mittels des maschinellen Lernverfahrens optimierte Signalauswertung häufig auch von einer tragbaren Vorrichtung, wie beispielsweise einem integrierten Sensor, ausgeführt werden.

Das mittels des oben beschriebenen maschinellen Lernverfahrens bestimmte "Set von Filtern" und das zugehörige "Set von Eigenschaften/Merkmalen" können für eine Online-Anwendung anschließend verwendet werden:
Wie mittels der Verfahrensschritte S3a-S3e in Fig. 1 bildlich dargestellt ist, werden in einer anschließend online ausgeführten Signalauswertung zuerst in einem Verfahrensschritt S3a Signale eines Sensors zusammen mit dem mindestens einem gut befundenen Frequenzbereich und der mindestens einen zur Signalauswertung gut befundenen Eigenschaft eingelesen. Anschließend werden die Signale des Sensors in einem Verfahrensschritt S3b unter Berücksichtigung des mindestens einen gut befundenen Frequenzbereichs gefiltert. In einem Verfahrensschritt S3c werden die Einzelwerte pro Signal für die zur Signalauswertung gut befundenen Eigenschaften/Merkmale bestimmt. In einem Verfahrensschritt S3d erfolgt anschließend eine Klassifizierung der gefilterten Signale unter Berücksichtigung der zuvor festgelegten Einzelwerte. In einem weiteren Verfahrensschritt S3e kann anschließend entschieden werden, ob die Signale des Sensors zufrieden stellend sind oder nicht. Ebenso können basierend auf den Signalen des Sensors Entscheidungen in dem Verfahrensschritt S3e getroffen werden.

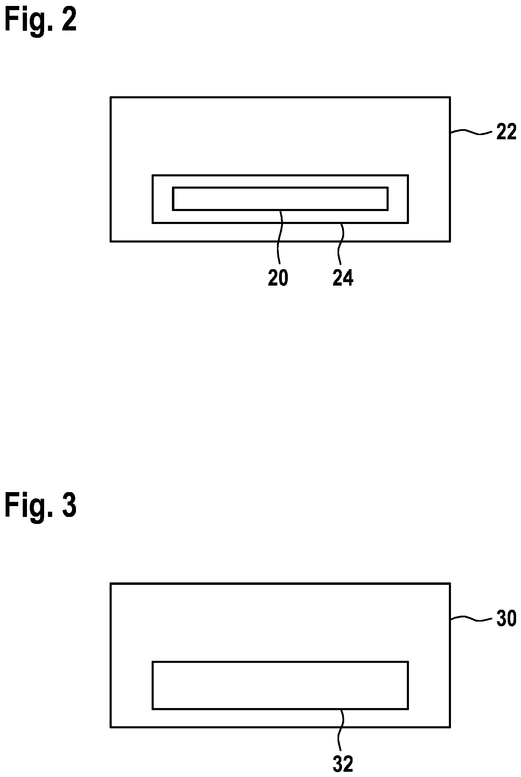

Fig. 2 zeigt eine schematische Darstellung einer Ausführungsform des Datenträgers.

Auf dem in Fig. 2 schematisch dargestellten Datenträger 20 sind zumindest ein Wertebereich von Frequenzbereichen und ein Wertebereich von Eigenschaften abgespeichert. Auch weitere der oben genannten Daten können auf dem Datenträger 20 abgespeichert sein. Der Datenträger 20 ist so an und/oder in einer Vorrichtung zur Signalauswertung 22 anordbar, dass auf dem Datenträger 20 von der Vorrichtung zur Signalauswertung 22 ausgelesen werden können. Beispielsweise ist der Datenträger 20 eine CD (Compact Disk) 20, welche in einem CD-Laufwerk 24 der Vorrichtung zur Signalauswertung 22 einführbar ist. Eine Ausbildbarkeit des Datenträgers 20 ist jedoch nicht auf die CD 20 beschränkt.

Auf dem Datenträger 20 ist mindestens ein Algorithmus hinterlegt, welcher die Vorrichtung zur Signalauswertung 22 zum selbstständigen/eigenständigen Ausführen zumindest der oben beschriebenen Verfahrensschritte S1 und S2a bis S2h unter Berücksichtigung eines bereitgestellten Lernsatzes von Signalen, einer bereitgestellten Soll-Klassifizierung des Lernsatzes von Signalen und einer bereitgestellten Zielgenauigkeit ansteuert. Auch weitere der oben beschriebenen Verfahrensschritte können aufgrund einer Hinterlegung mindestens eines entsprechenden Algorithmus auf dem Datenträger 20 mittels der derart angesteuerten Vorrichtung zur Signalauswertung 22 ausführbar sein.

Fig. 3 zeigt eine schematische Darstellung der Vorrichtung zur Signalauswertung.

Die in Fig. 3 schematisch dargestellte Vorrichtung 30 zur Signalauswertung kann beispielsweise ein Computer 30 sein. Vorzugsweise ist in diesem Fall der Computer 30 als Gateway zur Datenbearbeitung zwischen mindestens einem Sensor und mindestens einer nachfolgenden Verarbeitungsinstanz (wie z.B. einer Cloud) einsetzbar. Die Vorrichtung 30 zur Signalauswertung kann auch ein Mikrokontroller sein. Insbesondere kann der als Vorrichtung 30 zur Signalauswertung bezeichenbare Mikrokontroller in einem Sensorknoten und/oder in einem Sensorsystem integrierbar oder integriert sein. Auch weitere zur Signalauswertung geeignete Vorrichtungen können unter der Vorrichtung 30 zur Signalauswertung verstanden werden.

Die Vorrichtung 30 zur Signalauswertung umfasst eine Speichereinheit 32, auf welcher zumindest ein Wertebereich von Frequenzbereichen und ein Wertebereich von Eigenschaften abgespeichert sind. Auch weitere der oben genannten Daten können auf der Speichereinheit 32 abgespeichert sein. Außerdem ist auf der Speichereinheit 32 mindestens ein Algorithmus hinterlegt, welcher die Vorrichtung 30 zur Signalauswertung zum selbstständigen/eigenständigen Ausführen zumindest der oben beschriebenen Verfahrensschritte S1 und S2a bis S2h unter Berücksichtigung eines bereitgestellten Lernsatzes von Signalen, einer bereitgestellten Soll-Klassifizierung des Lernsatzes von Signalen und einer bereitgestellten Zielgenauigkeit ansteuert. Auch zum Ausführen weiterer der oben beschriebenen Verfahrensschritte kann die Vorrichtung 30 zur Signalauswertung mittels der Speichereinheit 32 angesteuert werden. Auf eine erneute Aufzählung dieser Verfahrensschritte wird hier verzichtet.

## Patentansprüche

1. Maschinelles Lernverfahren für eine Vorrichtung (22, 30) zur Signalauswertung mit den Schritten:
Bereitstellen eines Lernsatzes von Signalen, einer Soll-Klassifizierung des Lernsatzes von Signalen, eines Wertebereichs von Frequenzbereichen, eines Wertebereichs von Eigenschaften und einer Zielgenauigkeit an die Vorrichtung (22, 30) zur Signalauswertung; und
Ansteuern der Vorrichtung (22, 30) zur Signalauswertung zum selbstständigen Ausführen der folgenden Verfahrensschritte:
a.) Auswählen mindestens eines Frequenzbereichs aus dem vorgegebenen Wertebereich von Frequenzbereichen;
b.) Filtern der Signale des vorgegebenen Lernsatzes unter Verwendung des mindestens einen ausgewählten Frequenzbereichs;
c.) Auswählen mindestens einer zu untersuchenden Eigenschaft aus dem vorgegebenen Wertebereich von Eigenschaften;
d.) Bestimmen mindestens eines Einzelwerts pro gefiltertem Signal für die mindestens eine ausgewählte Eigenschaft;
e.) Klassifizieren des Lernsatzes von Signalen unter Berücksichtigung der bestimmten Einzelwerte; und
f.) Bestimmten einer Treffgenauigkeit des klassifizierten Lernsatzes von Signalen bezüglich der vorgegebenen Soll-Klassifizierung;
g.) Vergleichen der bestimmten Treffgenauigkeit mit der vorgegebenen Zielgenauigkeit;
wobei, sofern die bestimmte Treffgenauigkeit von der Zielgenauigkeit abweicht, zumindest die Verfahrensschritte c.) bis g.) wiederholt werden,
und wobei, sofern die Verfahrensschritte c.) bis g.) für den mindestens einen zuletzt ausgewählten Frequenzbereich so oft ausgeführt wurden, dass alle Kombinationen von Eigenschaften aus dem Wertebereich von Eigenschaften getestet sind, die Verfahrensschritte a.) bis g.) wiederholt werden,
h.) Festlegen und/oder Ausgeben des mindestens einen zuletzt ausgewählten Frequenzbereichs als mindestens einen gutbefundenen Frequenzbereich und der mindestens einen zuletzt ausgewählten Eigenschaft als mindestens eine gutbefundene Eigenschaft.

2. Maschinelles Lernverfahren nach Anspruch 1, wobei je ein wahrscheinlicher Arbeits- und/oder Rechneraufwand für jede Eigenschaft aus dem Wertebereich von Eigenschaften an die Vorrichtung (22, 30) zur Signalauswertung bereitgestellt wird, und wobei in dem Verfahrensschritt c) zuerst Eigenschaften mit einem geringeren wahrscheinlichen Arbeits- und/oder Rechneraufwand im Vergleich mit anderen Eigenschaften des Wertebereichs von Eigenschaften als die mindestens eine zu untersuchende Eigenschaft aus dem Wertebereich von Eigenschaften ausgewählt werden.

3. Maschinelles Lernverfahren nach Anspruch 1 oder 2, wobei der Verfahrensschritt a.) die folgenden Teilschritte umfasst:
a1.) Wählen einer ersten Anzahl von in dem Verfahrensschritt a.) auszuwählenden Frequenzbereichen so, dass die erste Anzahl ≥ 1 ist und unter einer vorgegebenen ersten Maximalanzahl liegt; und
a2.) Auswählen von so vielen Frequenzbereichen aus dem vorgegebenen Wertebereich von Frequenzbereichen, dass die Anzahl von ausgewählten Frequenzbereichen der in dem Teilschritt a1.) gewählten ersten Anzahl entspricht.

4. Maschinelles Lernverfahren nach einem der vorhergehenden Ansprüche, wobei der Verfahrensschritt c.) die folgenden Teilschritte umfasst:
c1.) Wählen einer zweiten Anzahl von in dem Verfahrensschritt c.) auszuwählenden Eigenschaften so, dass die zweite Anzahl ≥ 1 ist und unter einer vorgegebenen zweiten Maximalanzahl liegt; und
c2.) Auswählen von so vielen Eigenschaften aus dem vorgegebenen Wertebereich von Eigenschaften, dass die Anzahl von ausgewählten Eigenschaften der in dem Teilschritt c1.) gewählten zweiten Anzahl entspricht.

5. Datenträger (20) für eine Vorrichtung (22) zur Signalauswertung:
wobei auf dem Datenträger (20) ein Wertebereich von Frequenzbereichen und ein Wertebereich von Eigenschaften abgespeichert sind;
und wobei auf dem Datenträger (20) mindestens ein Algorithmus hinterlegt ist, welcher die Vorrichtung (22) zur Signalauswertung zum selbstständigen Ausführen der folgenden Verfahrensschritte unter Berücksichtigung eines bereitgestellten Lernsatzes von Signalen, einer bereitgestellten Soll-Klassifizierung des Lernsatzes von Signalen und einer bereitgestellten Zielgenauigkeit ansteuert:
a.) Auswählen mindestens eines Frequenzbereichs aus dem vorgegebenen Wertebereich von Frequenzbereichen;
b.) Filtern der Signale des vorgegebenen Lernsatzes unter Verwendung des mindestens einen ausgewählten Frequenzbereichs;
c.) Auswählen mindestens einer zu untersuchenden Eigenschaft aus dem vorgegebenen Wertebereich von Eigenschaften;
d.) Bestimmen mindestens eines Einzelwerts pro gefiltertem Signal für die mindestens eine ausgewählte Eigenschaft;
e.) Klassifizieren des Lernsatzes von Signalen unter Berücksichtigung der bestimmten Einzelwerte; und
f.) Bestimmten einer Treffgenauigkeit des klassifizierten Lernsatzes von Signalen bezüglich der vorgegebenen Soll-Klassifizierung;
g.) Vergleichen der bestimmten Treffgenauigkeit mit der vorgegebenen Zielgenauigkeit;
wobei, sofern die bestimmte Treffgenauigkeit von der Zielgenauigkeit abweicht, zumindest die Verfahrensschritte c.) bis g.) wiederholt werden,
und wobei, sofern die Verfahrensschritte c.) bis g.) für den mindestens einen zuletzt ausgewählten Frequenzbereich so oft ausgeführt wurden, dass alle Kombinationen von Eigenschaften aus dem Wertebereich von Eigenschaften getestet sind, die Verfahrensschritte a.) bis g.) wiederholt werden,
h.) Festlegen und/oder Ausgeben des mindestens einen zuletzt ausgewählten Frequenzbereichs als mindestens einen gutbefundenen Frequenzbereich und der mindestens einen zuletzt ausgewählten Eigenschaft als mindestens eine gutbefundene Eigenschaft.

6. Datenträger (20) nach Anspruch 5, wobei auf dem Datenträger (20) zusätzlich je ein wahrscheinlicher Arbeits- und/oder Rechneraufwand für jede Eigenschaft aus dem Wertebereich von Eigenschaften abgespeichert ist, und wobei die Vorrichtung (22) zur Signalauswertung mittels des mindestens einen auf dem Datenträger (20) hinterlegten Algorithmus dazu ansteuerbar ist, in dem Verfahrensschritt c) zuerst Eigenschaften mit einem geringeren wahrscheinlichen Arbeits- und/oder Rechneraufwand im Vergleich mit anderen Eigenschaften des Wertebereichs von Eigenschaften als die mindestens eine zu untersuchende Eigenschaft aus dem Wertebereich von Eigenschaften auszuwählen.

7. Vorrichtung (30) zur Signalauswertung mit:
einer Speichereinheit (32), auf welcher ein Wertebereich von Frequenzbereichen und ein Wertebereich von Eigenschaften abgespeichert sind;
wobei auf der Speichereinheit (32) mindestens ein Algorithmus hinterlegt ist, welcher die Vorrichtung zur Signalauswertung zum selbstständigen Ausführen der folgenden Verfahrensschritte unter Berücksichtigung eines bereitgestellten Lernsatzes von Signalen, einer bereitgestellten Soll-Klassifizierung des Lernsatzes von Signalen und einer bereitgestellten Zielgenauigkeit ansteuert:
a.) Auswählen mindestens eines Frequenzbereichs aus dem vorgegebenen Wertebereich von Frequenzbereichen;
b.) Filtern der Signale des vorgegebenen Lernsatzes unter Verwendung des mindestens einen ausgewählten Frequenzbereichs;
c.) Auswählen mindestens einer zu untersuchenden Eigenschaft aus dem vorgegebenen Wertebereich von Eigenschaften;
d.) Bestimmen mindestens eines Einzelwerts pro gefiltertem Signal für die mindestens eine ausgewählte Eigenschaft;
e.) Klassifizieren des Lernsatzes von Signalen unter Berücksichtigung der bestimmten Einzelwerte; und
f.) Bestimmten einer Treffgenauigkeit des klassifizierten Lernsatzes von Signalen bezüglich der vorgegebenen Soll-Klassifizierung;
g.) Vergleichen der bestimmten Treffgenauigkeit mit der vorgegebenen Zielgenauigkeit;
wobei, sofern die bestimmte Treffgenauigkeit von der Zielgenauigkeit abweicht, zumindest die Verfahrensschritte c.) bis g.) wiederholt werden,
und wobei, sofern die Verfahrensschritte c.) bis g.) für den mindestens einen zuletzt ausgewählten Frequenzbereich so oft ausgeführt wurden, dass alle Kombinationen von Eigenschaften aus dem Wertebereich von Eigenschaften getestet sind, die Verfahrensschritte a.) bis g.) wiederholt werden,
h.) Festlegen und/oder Ausgeben des mindestens einen zuletzt ausgewählten Frequenzbereichs als mindestens einen gutbefundenen Frequenzbereich und der mindestens einen zuletzt ausgewählten Eigenschaft als mindestens eine gutbefundene Eigenschaft.

8. Vorrichtung (30) zur Signalauswertung nach Anspruch 7, wobei auf der Speichereinheit (32) zusätzlich je ein wahrscheinlicher Arbeits- und/oder Rechneraufwand für jede Eigenschaft aus dem Wertebereich von Eigenschaften abgespeichert ist, und wobei die Vorrichtung (22) zur Signalauswertung mittels des mindestens einen auf der Speichereinheit (32) hinterlegten Algorithmus dazu ansteuerbar ist, in dem Verfahrensschritt c) zuerst Eigenschaften mit einem geringeren wahrscheinlichen Arbeits- und/oder Rechneraufwand im Vergleich mit anderen Eigenschaften des Wertebereichs von Eigenschaften als die mindestens eine zu untersuchende Eigenschaft aus dem Wertebereich von Eigenschaften auszuwählen.

9. Vorrichtung (30) zur Signalauswertung nach Anspruch 7 oder 8, wobei die Vorrichtung (30) ein Computer ist, welcher als Gateway zur Datenbearbeitung zwischen mindestens einem Sensor und mindestens einer nachfolgenden Verarbeitungsinstanz einsetzbar ist.

10. Vorrichtung (30) zur Signalauswertung nach Anspruch 7 oder 8, wobei die Vorrichtung (30) ein Mikrokontroller ist, welcher in einem Sensorknoten und/oder in einem Sensorsystem integrierbar oder integriert ist.
